# EUROPEAN PATENT APPLICATION

(11) **EP 1 520 475 A1**
(43) Date of publication of application: **06.04.2005**
(21) Application number: 03425643.8
(22) Date of filing: 01.10.2003
(51) Int. Cl.: A21C 3/02, A21C 3/10

(54) **Device for laminating a sheet of dough**

(71) Applicant: Doge Food Processing Machinery S.r.l., 36015 Schio (Vicenza) (IT)
(72) Inventor: Bertini Angelo, 20125 Rho (IT)
(74) Representative: Modiano, Guido, Dr.-Ing.

(57) **Abstract**

A lamination device (1) for a sheet of dough (4), comprising a supporting frame (5) for at least one pair of opposite pressers (2a,2b) that are spaced so as to define a lamination gap (3) for the sheet of dough (4), and characterized in that it comprises first adjustment means (12) that are adapted to vary the mutual distance between the pair of pressers (2a,2b) and second adjustment means (15) that are adapted to produce the angular movement of at least one of the pressers (2a,2b) about an adjustment axis that is substantially perpendicular to the plane of arrangement of the dough (4) that advances through the lamination gap (3), at least one first sensor (16) being provided which is adapted to detect the thickness of the dough (4) that exits from the lamination gap (3) substantially at the centerline of the sheet of dough (4) and at least one second sensor (17,17a) being provided which is adapted to detect the thickness of the sheet of dough (4) substantially at a respective lateral region of said sheet of dough, the lamination device (1) comprising first control and actuation means (18) that are functionally connected in input to the first and second sensors (16,17,17a) and actuate the first adjustment means (12) and the second adjustment means (15).

## Description

The present invention relates to a device for laminating a sheet of dough.

Currently, a very important step in processes for producing food products obtained starting from a continuous sheet of dough is the step for setting and controlling the thickness of such sheet when, as it exits from the lamination device or devices, it is sent to the formation and/or cutting line.

Generally, the cutting and formation operations are performed by carrying out an adjustment based on the speed of the conveyance means, which are designed to feed the continuous sheet of dough in output from the lamination device or lamination assembly, and on the time interval that elapses between two successive cutting or formation operations in general.

It is evident that unexpected variations in the thickness of the laminated dough can cause weight variations in the product being formed and therefore in the finished product.

Furthermore, in the production of particular food products the surface of the cut shape is fixed and depends on the geometric shape of the dies or blades used: in these particular applications, any variations in the thickness of the sheet of laminated dough cause volume variations (and accordingly weight variations) of the resulting shapes.

It is known that variations in the thickness of the laminated dough can occur spontaneously, for example due to the ordinary fluctuations of the rheological characteristics (consistency, plasticity, elasticity) of the dough being processed upstream of the rolling device or assembly; this is not uncommon, since the mixtures are prepared in batches (i.e., by way of discontinuous operations), and accordingly it is possible to observe a natural oscillation of these rheological characteristics between one mix and the next.

Clearly, by working in batches the rheological characteristics are obviously conditioned by the variations in the dosage of the various ingredients that compose the recipe, by their temperature, by the actual time that elapses between preparation of the mix and lamination in the lamination device or assembly, by the (manual or automatic) adjustment conditions of the devices upstream of lamination, by the natural variability of the chemical-physical characteristics (humidity, protein content, fat content, et cetera) and by factors that cannot always be identified easily.

It has been found that the variation of the rheological characteristics of the dough being processed determines at least two phenomena:
-- a variation in consistency/viscosity
-- a variation in elasticity

These two phenomena have a different effect on the uniformity of the lamination process: while the variation in consistency/viscosity increases the resistance of the material to compression and accordingly to reduction of its thickness in output from the lamination device, the elasticity variation produces an unexpected effect of more or less conspicuous reviving of the sheet of dough that exits from the lamination device, and this causes, after passing through the lamination gap, thicknesses of the sheet that are significantly greater than the width of such lamination gap.

Accordingly, as the elasticity varies, for an equal setting of the width of the lamination gap one obtains, downstream of the lamination device, variations in the actual thickness of the sheet of dough to be sent to the formation and cutting devices, with a consequent variation in the final characteristics (in terms of volume and weight) of the final products.

As is known, when a viscous substance is laminated by passing through a lamination gap, such substance applies to the lamination means that form the lamination gap a reaction force F that is directly proportional to the viscosity of the mass being laminated and to the average of the linear velocity of the lamination elements and is inversely proportional to the width of the lamination gap.

Such reaction force F is biased by adjusting the lamination device so as to ensure that the sheet of dough that exits from said device has the intended thickness.

It is evident from what has been described above that as viscosity varies, if the other parameters are left unchanged, the reaction force F discharged onto the mechanical elements that constitute the lamination device varies.

Moreover, it can be noted that the reaction force F can vary also in relation to the variation in the lamination speed, which can be varied intentionally by the operator in order to adapt, for example, the lamination speed to the production capacity of the line upstream or downstream of the lamination device.

Accordingly, the variation of this parameter also causes a variation in the balance of the forces that act on the lamination device, forcing the operator to adapt the width of the lamination gap.

It is therefore evident that more or less sudden variations in the reaction force F entail an immediate effect on the actual width of the lamination gap due to two phenomena:
-- the variation in the thrust that acts on the elements that form the lamination gap (for example between two lamination cylinders), with a consequent different compensation of the mechanical tolerances and plays in the coupling of the systems for adjusting the width on the supports;
-- the variation in the thrust on the elements that form the lamination gap, with a consequent variation in their flexing in their central part.

The first cited effect is due to a mutual spacing/approach of the lamination elements, caused by take-up of the mechanical tolerances and plays at the supports of the lamination elements.

The second effect produces a more complex result, since generation of a resultant thrust that acts at the centerline of the lamination elements causes flexing, with consequent arching, of said lamination elements.

As a consequence of the phenomenon described above, there is not only a variation in the actual thickness of the sheet of dough that exits from the lamination device, but also, and most importantly, a variation in the transverse uniformity of the thickness of the sheet, consequently generating gradual (and even substantial) differences in thickness from the center of the sheet toward the outer edges.

It is evident that this variation in transverse uniformity cannot be eliminated or compensated merely by adjusting the width of the lamination gap, since such adjustment can have an effect only on the distance between the supports, but the difference in thickness between the outer edges and the center persists, since it is caused by the mechanical elasticity of the lamination elements and not by their mutual spacing.

The flexural rigidity of the lamination elements depends on mechanical and geometric factors only, such as the material of which they are made, their diameter (if they are cylinders) and their thickness and length.

It is known that in some fields of technology, in order to try to reduce and partially compensate the deformation effect caused by the reaction force, the lamination elements are cambered. In the usual case in which the lamination elements are constituted by cylinders, it is possible to use "cylinders" that have a larger diameter at the center and a smaller diameter at their ends.

However, it is evident that such camber can be compensated perfectly only if the reaction force F is substantially equal to the force determined during design and is substantially constant.

As a consequence of the variation of the reaction force F (with respect to the force assumed during design), the camber can be insufficient or excessive, thus obtaining always uneven thicknesses.

Accordingly, as regards devices for laminating sheets of dough, this solution is unfeasible, since for all of the reasons described above it is necessary to deal with a continuous and unpredictable variability of the value of the reaction force F.

Again with reference to the lamination of sheets of dough, it should be noted that if lamination produces an uneven transverse thickness, lateral tensions in said sheet of dough also occur.

These tensions are generated by a different mechanical stress caused by the different stress affecting the sheet of dough at its outermost regions due to its passage through a smaller lamination gap than the central region.

The presence of differences in elasticity between the central part and the outer edges of the sheet of laminated dough and the presence of lateral tensions is one of the most important and strongly felt problems in the field of processes for laminating dough.

This phenomenon, besides causing weight differences as a consequence of the difference in thickness between the center and the outer edges of the band, generates different tensions between the center and the lateral edges of the sheet of dough, with a consequent difference in the behavior of the sheet of dough during subsequent processes. In particular, it has been found that these differences in stress produce a different contraction by elasticity of the parts cut at the sides with respect to the parts cut at the center.

The aim of the present invention is to eliminate or at least reduce drastically the drawbacks suffered by known types of lamination device.

Within this aim, an object of the invention is to provide a device for laminating a sheet of dough that is capable of ensuring that the thickness of the sheet of dough that exits from the device is constant and substantially identical to the set thickness.

Another object of the present invention is to provide a device for laminating a sheet of dough that allows to obtain a laminated sheet of dough that has a constant thickness along its transverse direction.

Another object of the invention is to provide a device for laminating a sheet of dough that allows to control in a precise manner the weight of the parts cut and/or formed by the formation and/or cutting devices arranged downstream of said lamination device.

Another object of the present invention is to provide a device for laminating a sheet of dough that is highly reliable in operation.

Another object of the invention is to provide a lamination device that can work by using a limited number of operators.

This aim and these and other objects that will become better apparent hereinafter are achieved by a lamination device for a sheet of dough according to the invention, which comprises at least one pair of opposite pressers that are spaced so as to define a lamination gap for said sheet of dough, and is characterized in that it comprises first adjustment means that are adapted to vary the mutual distance between said pair of pressers and second adjustment means that are adapted to produce the angular movement of at least one of the pressers about an axis that is substantially perpendicular to the plane of arrangement of the dough that advances through the lamination gap, at least one first sensor being provided which is adapted to detect the thickness of the dough that exits from the lamination gap substantially at the centerline of the sheet of dough and at least one second sensor being provided which is adapted to detect the thickness of the sheet of dough substantially at a respective lateral region of said sheet of dough, the lamination device according to the invention comprising first control and actuation means that are functionally connected in input to the first and second sensors and actuate the first adjustment means and the second adjustment means.

Advantageously, a lamination device according to the invention is characterized in that it comprises, downstream of the pair of pressers, weighing means that are adapted to detect the weight of a portion to be weighed that lies transversely to the advancement direction of the sheet of dough, the weighing means being functionally connected in input to the control and actuation means.

Conveniently, a lamination device according to the present invention is characterized in that it comprises, downstream of the pair of pressers, weighing means that are adapted to detect the weight of a portion to be weighed that lies transversely to the advancement direction of the sheet of dough, second control and actuation means being provided which are functionally connected in input to the weighing means and actuate formation and/or cutting means arranged downstream of the weighing means.

Further characteristics and advantages of the invention will become better apparent from the description of some preferred but not exclusive embodiments of a device for laminating a sheet of dough, illustrated by way of nonlimiting example in the accompanying drawings, wherein:
Figure 1 is a side elevation view of a portion of the device for laminating a sheet of dough according to the invention, with elements shown in phantom lines;
Figure 2 is a side elevation view of the side of the lamination device that lies opposite the one shown in Figure 1;
Figure 3 is a plan view of the device according to the invention;

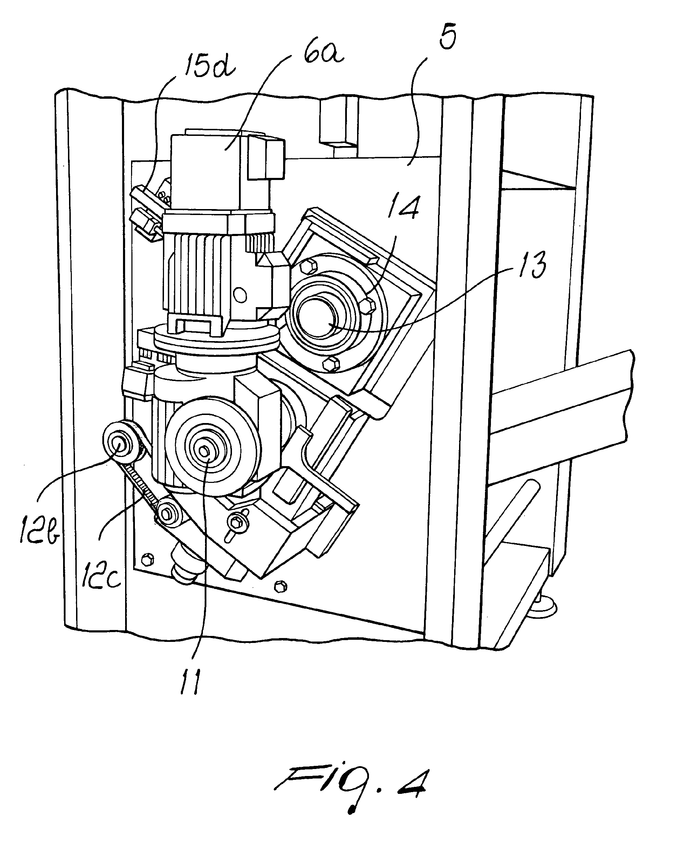

Figure 4 is a perspective view of a detail of the side of the lamination device according to the invention shown in Figure 1;
Figure 5 is a perspective view of a detail of the side of the lamination device shown in Figure 2;

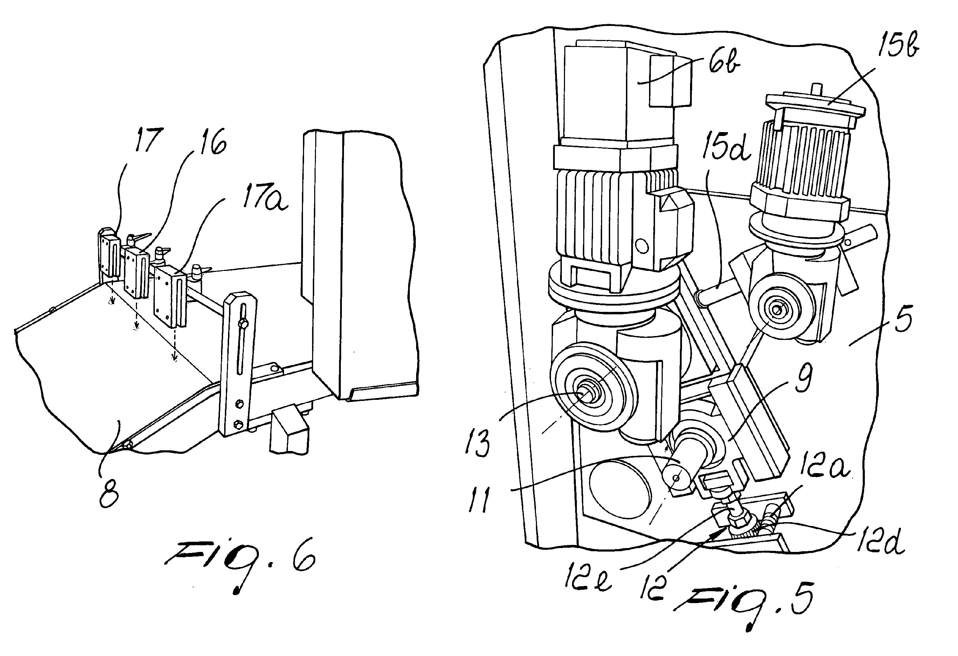

Figure 6 is a perspective view of the first sensor and of the second sensor; and
Figure 7 is a plan view, similar to Figure 3, illustrating a sheet of dough being processed.

In the examples of embodiments that follow, individual characteristics, given in relation to specific examples, may actually be interchanged with other different characteristics that exist in other examples of embodiment.

Moreover, it is noted that anything found to be already known during the patenting procedure is understood not to be claimed and to be disclaimed.

With reference to the figures, a lamination device for a sheet of dough according to the present invention, generally designated by the reference numeral 1, comprises at least one pair of opposite pressers 2a and 2b that are spaced so as to form a lamination gap 3 for a sheet of dough 4.

In particular, with reference to the example of embodiment shown in the figures, the pressers 2a and 2b can be constituted by a respective lamination cylinder, which is supported rotatably by a supporting frame 5.

In a fully equivalent manner, at least one of the two pressers can be constituted by a drum that supports, at its lateral surface, a plurality of free peripheral rollers, each of which can rotate about a longitudinal axis that lies parallel to the rotation axis of the drum.

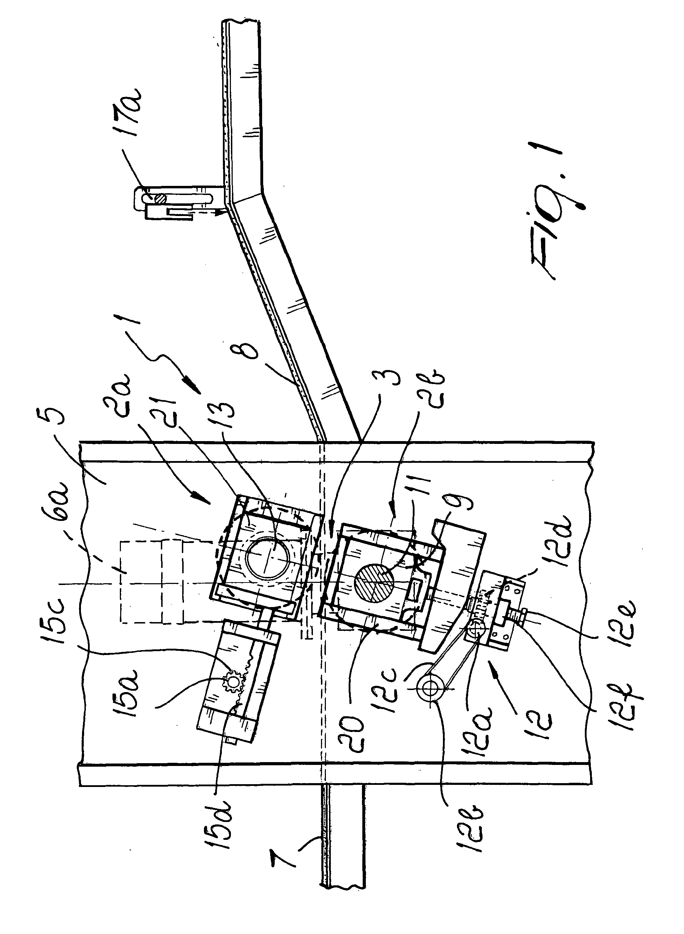

Advantageously, in the embodiment shown in Figure 1, the two lamination cylinders that constitute the pair of pressers 2a and 2b are turned about their axis by a respective motor 6a and 6b.

Downstream of the pair of pressers 2a and 2b means are provided for feeding the sheet of dough 4, which are constituted for example by a first conveyor belt 7 and are adapted to feed the dough in input to the lamination gap 3; downstream of the lamination device 1 there are instead means for sending the laminated dough, which can be constituted by a second conveyor belt 8 that is adapted to send the sheet of dough 4 that exits from the lamination gap 3 to optional cutting or formation stations.

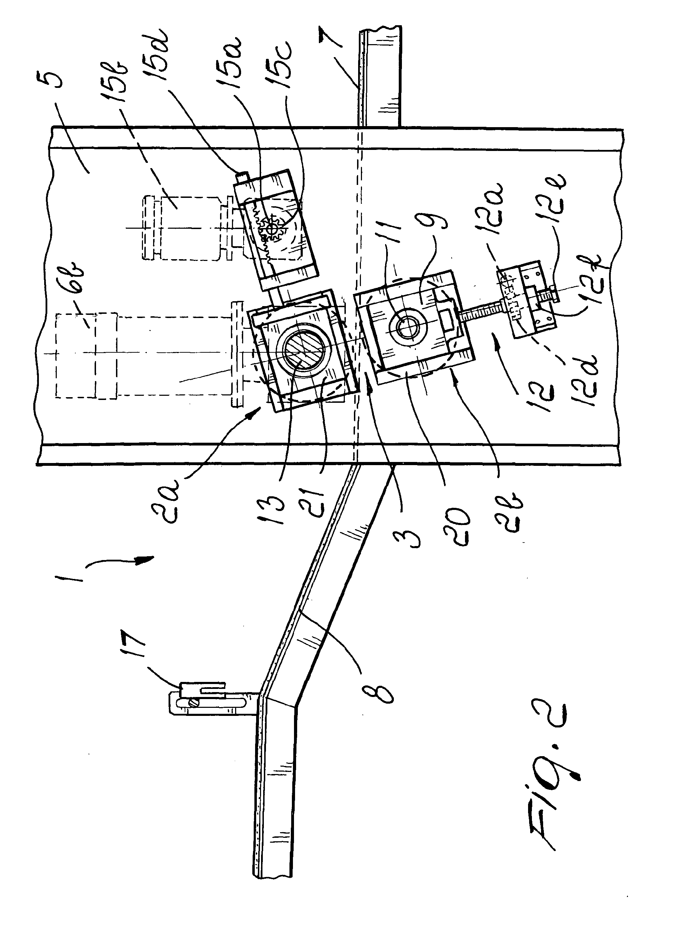

With particular reference to Figure 2, there are first adjustment means that are adapted to vary the distance between the pressers 2a and 2b. If the pressers 2a and 2b are constituted by two lamination cylinders, said first adjustment means can be adapted to allow the mutual spacing/approach of the respective rotation axes of the two lamination cylinders.

Merely by way of example, the first adjustment means can be constituted by at least one pair of slider elements 9, which are slidingly associated with the supporting frame 5 by way of linear guides 10; according to an example of embodiment, each slider element 9 rotatably supports an end shank 11 of at least one respective lamination cylinder (in the illustrated example, said lamination cylinder is designated by the reference numeral 20).

Advantageously, the supporting frame 5 supports first means 12 for moving at least one slider element 9 of the pair or pairs of slider elements 9: such movement means can be constituted by a linear actuator, provided with a body that is rigidly coupled to the supporting frame 5 and a movable element that is kinematically connected to one of the slider elements 9.

As an alternative, as shown in Figures 1 and 2, the first movement means 12 can be constituted by a first worm screw 12a, which is supported so that it can rotate at its ends by the supporting frame 5 and is turned by a motorized shaft 12b by way of a belt drive 12c. Advantageously, substantially at both of its ends the first worm screw 12a meshes with a respective toothed pulley 12d, which rotates rigidly with a second worm screw 12e that mates by screw coupling with a supporting female thread element 12f that is rigidly coupled to the supporting frame 5. The second worm screw is connected, at one of its ends, to a respective slider element 9.

Conveniently, the first adjustment means can have means for measuring and controlling the distance between the rotation axes of the two lamination cylinders: said measurement and control means can be provided for example by using a probe (constituted for example by a potentiometer of the linear type or of the optical-rule type).

The lamination device 1 is further provided with second adjustment means, which are adapted to produce an angular movement of at least one of the two pressers 2a and 2b about an angular adjustment axis that is substantially perpendicular to the plane of arrangement of the dough that advances through the lamination gap 3 and passes through the centerline of the pressers 2a and 2b.

If the pressers 2a and 2b are constituted by two lamination cylinders 20 and 21, one of the two cylinders, according to a preferred embodiment the lamination cylinder designated by the reference numeral 21 in the figures, can be moved in an angular fashion about an angular adjustment axis that passes through the plane of arrangement of the lamination slot 3, is perpendicular to the rotation axis of said lamination cylinder 21 and passes through the centerline of the lamination cylinders 20 and 21.

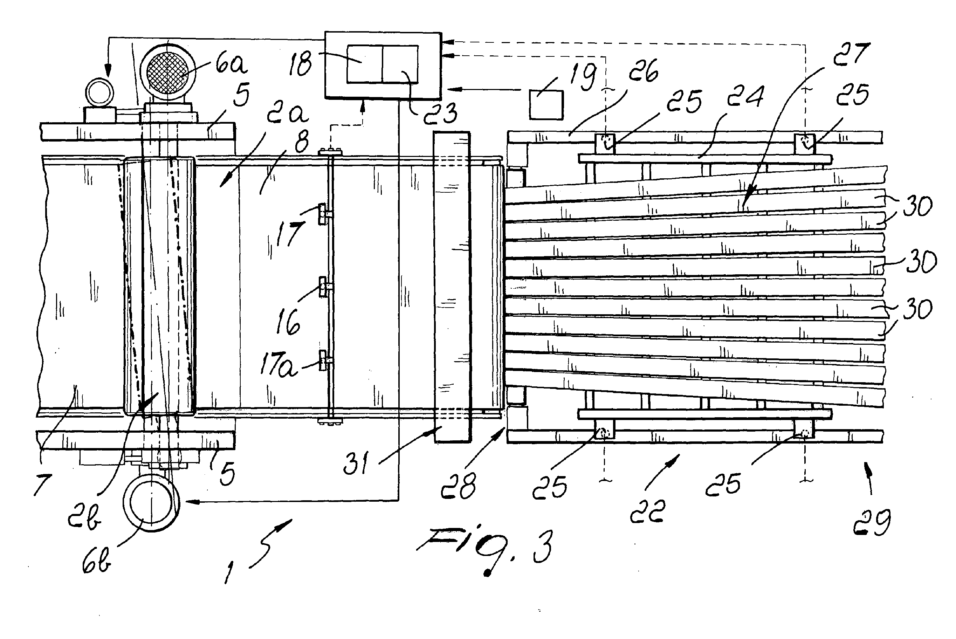

In practice, by producing by way of the second adjustment means the rotation of the lamination cylinder 21 about the angular adjustment axis, the two lamination cylinders 20 and 21 are arranged so that their rotation axis are mutually oblique, as shown in Figure 3.

To provide said second adjustment means, for example the shanks 13 of the lamination cylinder 21 can be supported rotatably by a respective supporting articulation 14 that can move with respect to the supporting frame 5 along a travel path.

A first example of embodiment of the supporting articulation 14 can be moved on command, with respect to the supporting frame 5, along a direction that is substantially parallel to the plane of arrangement of the portion of the sheet of dough that passes through the lamination gap 3; in this case it is convenient, however, to provide the shanks 13 so that they can slide axially with respect to the respective supporting articulation 14.

According to another variation, the supporting articulations 14 are slidingly associated with a respective circular curved guide, which is centered at the intersection between the rotation axis of the cylinder 21 and the angular adjustment axis; with reference to this particular solution, the shank 13 does not need to be able to slide with respect to the respective supporting articulation 14.

The second adjustment means further comprise second movement means 15, which act for example between the supporting frame 5 and one of the two supporting articulations 14 to allow on command the angular movement of the lamination cylinder 21 about the angular adjustment axis.

In this case also, the second movement means 15 can be constituted by a linear actuator.

As an alternative, with particular reference to the embodiment shown in Figures 1 and 2, the second movement means 15 comprise a shaft 15a, which is functionally connected to a motor 15b and rigidly rotationally supports, at end portions, two pinions 15c.

Each one of the two pinions 15c meshes with a respective rack element 15d, which can move with respect to the supporting frame 5 and engages a respective supporting articulation 14.

A lamination device 1 according to the present invention is provided with at least one first sensor 16 and with at least one second sensor 17, which are arranged transversely to the sheet of dough 4 downstream of the pressers 2a and 2b; the first sensor 16 is adapted to detect the thickness of the sheet of dough 4 substantially at the centerline of said sheet of dough 4, while the second sensor 17 is adapted to detect the thickness of the sheet of dough 4 substantially at a respective lateral region.

Advantageously, as shown in Figure 3, an additional second sensor 17a is used which is arranged opposite the second sensor 17 with respect to the centerline of the sheet of dough 4, so as to allow to detect simultaneously the thickness of the sheet of dough 4 at both lateral regions of said sheet of dough 4.

The sensors that can be used can be of various kinds. For example, it is possible to use optical sensors, preferably of the laser-beam type, which measure the thickness of the sheet of dough 4 by comparing the signal that detects the distance between the second conveyor belt 8 and said sensor and the signal that detects the distance between the sensor and the upper surface of the sheet of dough 4.

As an alternative, it is possible to use capacitive sensors or, if high accuracy of the measurement is not indispensable, mechanical probes constituted for example by a wheel element that is adapted to engage by contact the upper surface of the sheet of dough 4 and is connected to a lever system that is associated with a position transducer that detects the extent of the movements of the wheel element.

The lamination device 1 further has first control and actuation means, generally designated by the reference numeral 18, which are functionally connected in input to the first sensor 16 and to the second sensor 17 (and optionally to the additional second sensor 17a). The first control and actuation means 18 are adapted to actuate, in particular, the first adjustment means and the second adjustment means so as to ensure, as explained better hereinafter, a sheet of dough 4 is obtained whose thickness is uniform along the transverse extension of the sheet of dough 4 and substantially matches the set thickness.

In greater detail, the first control and actuation means 18 can be advantageously constituted by a PLC device that is functionally connected to user interface means 19 constituted for example by a data entry keyboard with an optional display.

The PLC device is programmed to evaluate any differences between a predefined thickness set by the user by way of said interface means 19 and the thickness measured by the sensors 16, 17 and optionally 17a.

In particular, if the PLC device detects a difference between the thickness, measured for example by the first sensor 16, and the value of the set thickness, it emits a signal to actuate the first adjustment means in order to move the pressers 2a and 2b closer or further apart one another.

At the same time, if the PLC device checks that there is a difference between the thicknesses measured at the centerline of the sheet of dough 4 by the first sensor 16 and at one or both of the lateral edges by the sensors 17 and 17a, it actuates the second adjustment means so as to produce an angular movement of one of the two pressers 2a or 2b about the angular adjustment axis.

According to another important aspect of the present invention, the lamination device 1 can be provided, downstream of the pressers 2a and 2b, with weighing means 22, which are adapted to detect the weight of a portion to be weighed that lies transversely to the advancement direction of the sheet of dough 4.

According to a first embodiment, said weighing means 22 are functionally connected in input to the first control and actuation means 18. In this manner, if one wishes to produce finished products in which the outer surface of the product must be kept constant (circular pizzas having a specific diameter, for example) and at the same time one wishes to maintain the weight of said finished products controlled and constant, the PLC device can be programmed so that it is possible to calculate the weight of the finished products by knowing the weight per unit surface detected by the weighing means 22 and the surface of the finished products. If said calculated weight does not match the set weight, the PLC device actuates the first adjustment means in order to reduce or increase, according to the requirements, the thickness and therefore the weight per unit surface of the sheet of dough 4 that exits from the lamination gap 3.

According to another embodiment, the weighing means 22 can be functionally connected in input to second control and actuation means 23.

Said second control and actuation means 23 can be constituted, as explained above regarding the first control and actuation means 18, by a PLC device, which according to the requirements can be integrated with the first control and actuation means 18 or provided as an independent device.

In this case, the second control and actuation means 23 are adapted to actuate the cutting or formation devices arranged downstream of the weighing means 22. In practice the cutting frequency is controlled according to the weight of the sheet of dough per unit surface measured by the weighing means 22 so as to obtain pieces of formed dough, and therefore finished products, that all have the same weight.

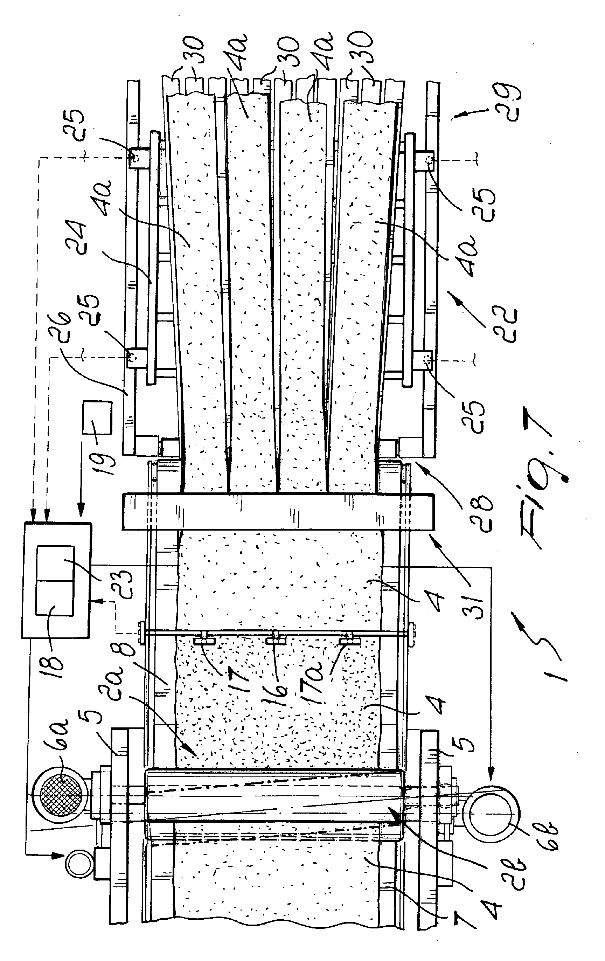

In greater detail and with particular reference to Figures 3 and 7, the weighing means 22 can be constituted by a weighing frame or bridge 24, which rests on at least one load cell 25 supported by the supporting frame 26.

According to a preferred embodiment, it is possible to use four load cells 25.

Conveniently, the supporting frame 26 is independent of the supporting frame 5 and in particular of the second conveyor belt 8, so that any vibrations generated due to the moving parts (such as for example the pressers or the cutting or formation devices) both upstream and downstream of the weighing means 22 are not transmitted to said supporting frame 26, compromising the precision of the weight measurement.

The weighing bridge 24 supports conveyor means 27 that are adapted to produce the advancement of the sheet of dough 4 from an input region 28 to an output region 29 in order to feed it to the cutting and formation devices.

Advantageously, the conveyor means 27 are constituted by a plurality of belts 30 arranged side by side.

Conveniently, it is possible to provide, substantially upstream of the input region 28, cutting means 31 that are adapted to produce a plurality of longitudinal cuts in the sheet of dough 4 so as to obtain a plurality of strips of dough 4a.

In this case, advantageously the conveyor means 27 are provided with spacer means 32 that are adapted to move mutually apart the belts 30 individually or in groups along their advancement direction from the input region 28 to the output region 29.

According to a preferred example of embodiment, the belts 30 are moved mutually apart in groups of three by spacing wings that can be fixed to two supporting bases that are arranged respectively at the input region 28 and at the output region 29.

The use of a plurality of belts 30 instead of a single conveyor belt allows to limit the tensions that are transferred during operation from the supporting frame 26 to the weighing bridge 24.

The belts 30 in fact are substantially narrower than they are long, and accordingly they can yield in a transverse direction.

Operation of the lamination device according to the invention is as follows.

The feeder means feed a sheet of dough, which is either shapeless or has already been subjected to previous lamination operations, in input to the lamination gap 3 formed by the pair of pressers 2a and 2b.

As can be noticed, in the particular case in which the pressers 2a and 2b are constituted by a respective lamination cylinder 20 and 21, the plane of arrangement of the portion of the sheet of dough 4 that passes through the pressers 2a and 2b is parallel to planes that are parallel and respectively tangent to the two regions of the outer surface of the lamination cylinders 20 and 21 that are located at the minimum distance and accordingly form the lamination gap 3.

The sheet of dough 4 that exits from the pressers 2a and 2b encounters the first sensor 16 and the second sensors 17 and 17a, which detect its thickness at the centerline and at the lateral regions.

According to a first operating method, first of all the PLC device can perform a comparison between the thickness requested by the user and set by said user by way of the user interface means 19 and the thickness measured by the sensor 16. If the thickness measured by the first sensor 16 under- or overapproximates the requested (and set) thickness, the PLC actuates the first movement means 12 in order to actuate respectively a movement of the pressers 2a and 2b away from each other or toward each other by a preset extent. If the measurement taken subsequently by the first sensor 16 detects a variation of the measured thickness with respect to the set thickness that has the same sign, the PLC device actuates a further approaching or spacing by the same extent, while if the detected displacement has the opposite sign, the PLC device actuates the first movement means 12 so as to produce a movement in the opposite direction and by a lesser extent than the one performed earlier.

At the same time, the PLC device compares the thicknesses measured by the first sensor 16 and by the second sensors 17 and 17a in order to detect the existence of a difference in thickness between the centerline and the lateral regions of the sheet of dough 4.

If such a difference is detected, the PLC device activates the second movement means 15 in order to produce an angular movement, about the angular adjustment axis, of one of the two pressers 2a and 2b and in particular of the lamination cylinder 21. This varies the distance between the regions of the pressers 2a and 2b that form the lamination gap 3 that increases gradually starting from the angular adjustment axis toward the lateral regions of the sheet of dough 4, so as to compensate for the deformation of the lamination cylinders 20 and 21, which is greatest at the angular adjustment axis, obtaining accordingly a constant thickness of the sheet of dough 4 that exits from the pressers 2a and 2b.

The achievement of a constant thickness of the sheet of dough 4 along the transverse direction is ensured by the PLC device, which is programmed to actuate the second movement means 15 in the same manner described for the first movement means.

If the lamination device according to the invention is provided with the weighing means 22, said means detect the weight, generally the weight per unit surface, of the sheet of dough 4 to be fed to the cutting and/or formation devices. The measurement that arrives from the weighing means is processed by the second control and actuation means 23 (optionally integrated in a single PLC device with the first control and actuation means 18) in order to control, according to the requirements, the cutting frequency of the formation and/or cutting means or the first movement means in order to achieve a variation of the thickness of the sheet of dough 4 with consequent reduction or increase of the weight of said sheet of dough 4, so as to achieve, in the case of finished products that have a preset surface, a constant weight that corresponds to the intended weight.

All the characteristics of the invention described above as advantageous, convenient or the like, may also be omitted or replaced by equivalents.

The invention thus conceived is susceptible of numerous modifications and variations, all of which are within the scope of the inventive concept.

Thus, for example, the weighing means 22 can be constituted by one or more density sensors, which cooperate or are integrated with the first and/or second sensors 16, 17 and 17a, adapted to detect the specific gravity of the advancing dough.

According to another possible variation, the lamination device can comprise a plurality of pairs of pressers, each of which is associated with respective first control and actuation means that are functionally connected to corresponding first and/or second sensors.

As an alternative, it is possible to provide, upstream of the first and second sensors, at least two pairs of pressers. In this case, the first control and actuation means can actuate first adjustment means and second adjustment means, which can be associated with both pairs of pressers or with just one of the two pairs.

In practice it has been found that the invention has achieved the intended aim and objects.

In particular, it has been found that the combined action of the first adjustment means and of the weighing means allows to provide a lamination device that is capable of compensating automatically the variations in the thickness of the sheet of dough with respect to the intended thicknesses and of checking at the same time the weight of the finished products.

In practice, the materials used, as well as the contingent shapes and dimensions, may be any according to requirements.

All the details may further be replaced with other technically equivalent elements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A lamination device for a sheet of dough, comprising a supporting frame for at least one pair of opposite pressers that are spaced so as to define a lamination gap for said sheet of dough, **characterized in that** it comprises first adjustment means that are adapted to vary the mutual distance between said pair of pressers and second adjustment means that are adapted to produce the angular movement of at least one of said pressers about an adjustment axis that is substantially perpendicular to the plane of arrangement of the dough that advances through said lamination gap, at least one first sensor being provided which is adapted to detect the thickness of the dough that exits from said lamination gap substantially at the centerline of said sheet of dough and at least one second sensor being provided which is adapted to detect the thickness of said sheet of dough substantially at a respective lateral region of said sheet of dough, said lamination device comprising first control and actuation means that are functionally connected in input to said at least one first sensor and said at least one second sensor and actuate said first adjustment means and said second adjustment means.

2. The lamination device according to claim 1, **characterized in that** it comprises, downstream of said at least one pair of pressers, weighing means that are adapted to detect the weight of a weighing portion of said sheet of dough, which lies transversely with respect to the advancement direction of said sheet of dough, said weighing means being functionally connected in input to said first control and actuation means in order to adjust the thickness of the sheet of dough that exits from said lamination gap.

3. The lamination device according to claims 1 or 2, **characterized in that** it comprises, downstream of said at least one pair of pressers, weighing means that are adapted to detect the weight of a portion to be weighed of said sheet of dough, which is arranged transversely to the advancement direction of said sheet of dough, second control and actuation means being provided which are functionally connected in input to said weighing means, said second control and actuation means actuating formation and/or cutting means arranged downstream of said weighing means.

4. The lamination device according to one or more of the preceding claims, **characterized in that** said first control and actuation means comprise a PLC device.

5. The lamination device according to one or more of the preceding claims, **characterized in that** said PLC device is functionally connected to user interface means for entering data related at least to the set thickness of the sheet of dough to be obtained.

6. The lamination device according to one or more of the preceding claims, **characterized in that** said PLC device actuates said first adjustment means and said second adjustment means according to differences observed between said set thickness and the thickness measured by said at least one first sensor and by said at least one second sensor.

7. The lamination device according to one or more of the preceding claims, **characterized in that** said pressers comprise a respective lamination cylinder that can be rotated about its own rotation axis.

8. The lamination device according to one or more of the preceding claims, **characterized in that** said first adjustment means comprise at least one pair of slider elements that rotatably support the end shanks of at least one of the lamination cylinders, first means being provided for moving at least one of said slider elements toward or away from the rotation axis of the other lamination cylinder.

9. The lamination device according to one or more of the preceding claims, **characterized in that** said first movement means comprise a linear actuator provided with a body that is rigidly coupled to said supporting frame and a movable element that is kinematically connected to said at least one slider element.

10. The lamination device according to one or more of the preceding claims, **characterized in that** said first movement means comprise a first worm screw, which is supported so that it can rotate substantially at its ends by said supporting frame and is turned by a motorized shaft, said first worm screw meshing substantially at both of its ends with a respective toothed pulley that rotates rigidly with a second worm screw that engages by screw coupling a female thread supporting element that is monolithic with said supporting frame, said second worm screw being connected, at one end, to a respective slider element.

11. The lamination device according to one or more of the preceding claims, **characterized in that** said first movement means comprise means for measuring and controlling the mutual distance between said pressers.

12. The lamination device according to one or more of the preceding claims, **characterized in that** said second adjustment means comprise second movement means that are adapted to move along a direction of travel at least one rotatable supporting articulation for a respective shank of at least one lamination cylinder.

13. The lamination device according to one or more of the preceding claims, **characterized in that** said direction of travel is rectilinear, said at least one supporting articulation engaging said respective shank by axial sliding.

14. The lamination device according to one or more of the preceding claims, **characterized in that** said second movement means comprise a shaft that is functionally connected to a motor and rigidly rotationally supports, substantially at respective end portions, a pinion that meshes with a respective rack element that can move with respect to said supporting frame and engages a respective supporting articulation.

15. The lamination device according to one or more of the preceding claims, **characterized in that** said direction of travel is circular.

16. The lamination device according to one or more of the preceding claims, **characterized in that** said second adjustment means comprise means for measuring and controlling the angular movement of said presser.

17. The lamination device according to one or more of the preceding claims, **characterized in that** said first adjustment means act on one of said lamination cylinders and said second adjustment means act on the other lamination cylinder.

18. The lamination device according to one or more of the preceding claims, **characterized in that** said weighing means comprise a supporting frame for a weighing bridge that is associated with at least one load cell, means for conveying said sheet of dough being provided which slidingly engage said weighing bridge.

19. The lamination device according to one or more of the preceding claims, **characterized in that** said conveyor means comprise a plurality of belts that are mutually adjacent and run between an input region and an output region.

20. The lamination device according to one or more of the preceding claims, **characterized in that** said conveyor means comprise spacer means that are adapted to gradually space apart at least two of said plurality of belts along their extension from the input region to the output region.

21. The lamination device according to one or more of the preceding claims, **characterized in that** said plurality of belts comprises at least two groups of belts, each one of said at least two groups of belts comprising at least two belts arranged side by side, said spacer means being adapted to gradually space apart said at least two groups of belts along their extension from the input region to the output region.

22. The lamination device according to one or more of the preceding claims, **characterized in that** said weighing means comprise at least one sensor for detecting the density of the sheet of dough, which cooperates at least with said first sensor in order to determine the weight of said band of dough.

23. The lamination device according to one or more of the preceding claims, **characterized in that** at least said first sensor comprises a density sensor.
